# EUROPÄISCHE PATENTSCHRIFT

(11) **EP 3 411 638 B1**
(45) Veröffentlichungstag und Bekanntmachung des Hinweises auf die Patenterteilung: **04.03.2020**
(21) Anmeldenummer: 16777892.7
(22) Anmeldetag: 22.08.2016
(51) Int. Cl.: F24S 20/70, H02S 30/10, H02S 40/32, H02S 40/34, H02S 40/36

(54) **PHOTOVOLTAIKMODUL**
PHOTOVOLTAIC MODULE
MODULE PHOTOVOLTAÏQUE

(30) Priorität: 21.08.2015 AT 507302015; 03.09.2015 AT 507542015
(43) Veröffentlichungstag der Anmeldung: 12.12.2018
(73) Patentinhaber: Guger Forschungs GmbH, 4364 St. Thomas am Blasenstein (AT)
(72) Erfinder: TUCKOVÁ, Eva, 83101 Bratislava (SK)
(86) Internationale Anmeldenummer: PCT/AT2016/060036
(87) Internationale Veröffentlichungsnummer: WO 2017/031516

(56) Entgegenhaltungen:
- WO-A1-2013/093945
- WO-A2-2007/062278
- AU-A4- 2009 101 216
- DE-A1-102010 050 052
- US-A1- 2014 224 165
- DATABASE EPODOC [Online] EUROPEAN PATENT OFFICE, THE HAGUE, NL; 26. April 2007 (2007-04-26), XP002765479, Database accession no. JP-2005297361-A -& JP 2007 109769 A (TAKIRON CO) 26. April 2007 (2007-04-26)
- DATABASE EPODOC [Online] EUROPEAN PATENT OFFICE, THE HAGUE, NL; 28. November 2013 (2013-11-28), XP002765480, Database accession no. JP-2012113589-A -& JP 2013 239684 A (NEC CORP) 28. November 2013 (2013-11-28)

## Beschreibung

Die Erfindung betrifft ein Photovoltaikmodul zur Produktion von Strom aus Sonnenenergie, wobei das Photovoltaikmodul als Schwimmkörper ausgebildet ist.

Aus der WO13006882 A1 und der WO8125154 A1 sind schwimmende Photovoltaikmodule bekannt, welche zu einem Verbund zusammengeschlossen sind.

Die aus der WO13006882 A1 und der WO08125154 A1 bekannten Solarmodule weisen den Nachteil auf, dass die Photovoltaikmodule nur eine begrenzte Kippstabilität aufweisen und daher nicht stabil im Wasser liegen.

Die WO 2013/093945 A1 offenbart einen Schwimmkörper mit darauf angeordneten Photovoltaikzellen. Der Schwimmkörper weist an dessen dem Wasser zugewandter Unterseite eine den Schwimmkörper nicht durchdringende Ausnehmung auf, um dem Schwimmkörper zusätzlichen Auftrieb zu verleihen.

Die US 2014224165 A1 offenbart einen Schwimmkörper zur Aufnahme eines herkömmlichen gerahmten Photovoltaikmodules. Der Schwimmkörper weist in dessen Zentrum eine Ausnehmung auf.

Der vorliegenden Erfindung liegt die Aufgabe zugrunde schwimmende Photovoltaikmodule zu schaffen, welche eine erhöhte Kippstabilität aufweisen.

Diese Aufgabe der Erfindung wird durch das Photovoltaikmodul gemäß Anspruch 1 gelöst. Erfindungsgemäß ist ein Photovoltaikmodul zur Produktion von Strom aus Sonnenenergie ausgebildet. Das Photovoltaikmodul umfasst einen Basiskörper, mit einer Unterseite und einer Oberseite, und an der Oberseite des Basiskörpers angeordnete Photovoltaikzellen. Der Basiskörper ist als im Wasser Auftrieb erzeugender Trägerkörper ausgebildet. Der Basiskörper ist als formstabiler Träger für die Photovoltaikzellen ausgebildet und die Photovoltaikzellen sind direkt am Basiskörper angeordnet.

Ein Vorteil der vorliegenden Erfindung liegt darin, dass durch das direkte Anordnen der Photovoltaikzellen am Basiskörper die Schwimmfähigkeit des Photovoltaikmodules verbessert werden kann. Insbesondere kann ein Stabiler Trägerrahmen, wie er bei herkömmlichen Photovoltaikmodulen verwendet wird weggelassen werden. Dadurch kann der Schwerpunkt des Photovoltaikmodules in das Zentrum des Photovoltaikmodules verlagert werden, wodurch die Stabilität des Photovoltaikmodules erhöht werden kann. Darüber hinaus kann durch den erfindungsgemäßen Aufbau das Gesamtgewicht des Photovoltaikmodules reduziert werden. Außerdem können die Produktionskosten zur Herstellung eines derartigen Photovoltaikmodules aufgrund des einfachen Aufbaues reduziert werden.

Ferner kann vorgesehen sein, dass die Photovoltaikzellen als formflexibles Dünnschicht Photovoltaikarray ausgebildet sind und der Basiskörper den Photovoltaikzellen ausreichende Stabilität verleiht. Von Vorteil ist hierbei, dass durch den Basiskörper die Form für die Oberfläche der Photovoltaikzellen vorgegeben wird. Das formflexible Photovoltaikarray kann an eine beliebige Form des Basiskörpers angepasst werden. Somit ist es möglich, dass einheitlich hergestellte Photovoltaikzellen auf verschieden geformte Basiskörper aufgebracht werden und somit verschiedenartig geformte Photovoltaikmodule erzeugt werden können.

Weiters kann es zweckmäßig sein, dass der Basiskörper eine Ausnehmung aufweist, in welcher die Photovoltaikzellen angeordnet sind. Von Vorteil ist hierbei, dass die Photovoltaikzellen in der Ausnehmung im Basiskörper aufgenommen werden können, ohne dass die Photovoltaikzellen gegenüber dem Basiskörper vorstehen. Somit können die Photovoltaikzellen vor mechanischer Beschädigung besser geschützt werden, als wenn sie gegenüber dem Basiskörper vorstehend angeordnet sind.

Darüber hinaus ist es möglich, dass zwischen den Photovoltaikzellen und dem Basiskörper ein unteres Einbettelement, vorzugsweise eine Einbettfolie angeordnet ist, welche als Feuchtigkeitssperre zum Schutz der Photovoltaikzellen ausgebildet ist. Von Vorteil ist hierbei, dass mittels der Feuchtigkeitssperre die Photovoltaikzelle gegenüber Umgebungseinflüssen und Feuchtigkeitseintritt geschützt werden kann. Insbesondere kann dadurch die Langlebigkeit der Photovoltaikzelle erhöht werden.

Gemäß der Erfindung sind im Basiskörper mehrere Taschen ausgebildet, welche sich ausgehend von der Unterseite des Basiskörpers in Richtung zur Oberseite des Basiskörpers erstrecken. Von Vorteil ist hierbei, dass durch die Taschen Luftpolster gebildet werden können, welche dem Basiskörper bzw. dem Photovoltaikmodul zusätzlichen Auftrieb verleihen. Darüber hinaus kann bei leichtem Wellengang Wasser an die Oberseite der Taschen schwappen, was zu einer erhöhten Kühlung der Photovoltaikzellen führt. Die erhöhte Kühlung wird dadurch erreicht, dass das kühlende Wasser die Unterseite der Photovoltaikzellen oder zumindest die darunter liegende Schicht erreichen kann.

Gemäß der Erfindung dringen die Taschen den Basiskörper vollständig durch. Von Vorteil ist hierbei, dass das Wasser direkt bis an die Unterseite der Photovoltaikzellen gelangen kann.

Ferner kann es zweckmäßig sein, dass die Photovoltaikzellen nach außen hin mittels einer Glasabdeckung abgedeckt sind, wobei die Glasabdeckung bündig mit dem Basiskörper abschließt. Dadurch kann erreicht werden, dass die Photovoltaikzellen durch die Glasabdeckung besonders gut geschützt werden können, wobei die Glasabdeckung in den Basiskörper integriert sein kann, sodass der Basiskörper mit den Photovoltaikzellen bzw. der Glasabdeckung eine Einheit bildet. Optional kann vorgesehen sein, dass die Glasabdeckung seitlich gegenüber der Ausnehmung vorsteht und in einem Auflagebereich am Basiskörper aufliegt. In diesem Auflagebereich kann die Glasabdeckung beispielsweise mittels einer Klebeverbindung mit dem Basiskörper verbunden sein. Weiters ist es möglich, dass diese Klebeverbindung als zusätzliche Dichtschicht ausgeführt ist und beispielsweise mittels einer Silikonschicht realisiert wird.

Darüber hinaus kann vorgesehen sein, dass die am Basiskörper angeordneten Photovoltaikzellen eine gewölbte Oberfläche bilden. Von Vorteil ist hierbei, dass durch die Wölbung der Oberfläche ein erhöhter Wirkungsgrad gegenüber einem Photovoltaikmodul mit einer flachen Oberfläche erreicht werden kann. Dieser überraschende Effekt kann besonders dann beobachtet werden, wenn Wellengang herrscht und sich die Photovoltaikmodule bewegen. Darüber hinaus kann durch die gewölbte Oberfläche erreicht werden, dass auf die Oberfläche gelangtes Wasser sich nicht an der Oberfläche eines Photovoltaikmodules sammelt, sondern von dem Photovoltaikmodul abgeleitet wird, um eine Beeinträchtigung der Leistung des Photovoltaikmodules hintan zu halten.

Weiters kann vorgesehen sein, dass die Photovoltaikzellen in einem Randbereich des Photovoltaikmoduls in einem Winkel nach außen hin geneigt angeordnet sind. Der Winkel kann zwischen 0,5° und 15°, insbesondere zwischen 1° und 10°, bevorzugt zwischen 2° und 5° betragen. Besonders durch eine Neigung der Photovoltaikzellen in diesem Winkelbereich kann ein überraschend guter Wirkungsgrad der Photovoltaikmodule erreicht werden.

Ferner kann es zweckmäßig sein, wenn die Photovoltaikzellen in einem Zentralbereich des Photovoltaikmoduls parallel zur Unterseite des Basiskörpers angeordnet sind. Bei einer derartigen Ausführung konnte ein erhöhter Wirkungsgrad des Photovoltaikmodules festgestellt werden.

Gemäß einer Weiterbildung ist es möglich, dass zumindest neun Photovoltaikzellen in einem Karomuster am Basiskörper angeordnet sind, wobei die im Zentrum angeordnete Photovoltaikzelle parallel zur Unterseite des Basiskörpers ausgerichtet ist und die sich außerhalb des Zentrums befindlichen Photovoltaikzellen in einem Winkel von der sich im Zentrum befindlichen Photovoltaikzelle weggedreht sind. Insbesondere durch diese Weiterbildung kann erreicht werden, dass die Photovoltaikzellen eine gewölbte Oberfläche bilden.

Weiters kann es zweckmäßig sein, wenn der Basiskörper eine kreisförmige Grundfläche aufweist, wobei an zwei einander gegenüberliegenden Kreisabschnitten jeweils eine Ausnehmung ausgebildet ist, welche in etwa den Radius der kreisförmigen Grundfläche aufweist. Durch diese Maßnahmen kann erreicht werden, dass zwei Basiskörper mit einer kreisförmigen Grundfläche aneinandergefügt werden können, wobei die freie Fläche zwischen einzelnen Basiskörpern möglichst gering gehalten werden kann. Darüber hinaus kann vorgesehen sein, dass sich die Basiskörper teilweise überlappen.

Insbesondere kann es vorteilhaft sein, wenn zwischen Basiskörper und den Photovoltaikzellen ein Aufsatz angeordnet ist, welcher eine gewölbte Oberfläche aufweist. Durch den Aufsatz können die Photovoltaikzellen in einer gewölbten Stellung am Basiskörper angeordnet werden.

In einer Alternativvariante kann vorgesehen sein, dass die Photovoltaikzellen direkt in den Basiskörper integriert sind. Von Vorteil ist hierbei, dass die Photovoltaikzellen durch den Basiskörper und die Nähe zum Wasser gekühlt werden können. Darüber hinaus weist ein derartig aufgebautes Photovoltaikmodul möglichst wenige Einzelteile auf, wodurch die Komplexität des Photovoltaikmodules vermindert werden kann.

Weiters kann vorgesehen sein, dass der Basiskörper aus einem Kunststoff aus der Gruppe der thermoplastischen Kunststoffe, insbesondere aus Polyethylen gebildet ist. Von Vorteil ist hierbei, dass der Basiskörper dadurch eine möglichst geringe Masse aufweisen kann und darüber hinaus eine hohe Korrosionsbeständigkeit aufweisen kann. Außerdem sind thermoplastische Kunststoffe gut zu verarbeiten, sodass der Basiskörper beispielsweise durch ein Spritzgussverfahren hergestellt werden kann. Dies führt insbesondere in der Massenproduktion zu erheblichen Kosteneinsparungen.

Ferner kann vorgesehen sein, dass am Basiskörper vier Magnete auf den Umfangbereich verteilt angeordnet sind, wobei zwei der Magnete derart am Basiskörper angeordnet sind, dass der Nordpol des Magneten vom Zentrum des Basiskörpers abgewandt ist und zwei der Magnete derart am Basiskörper angeordnet sind, dass der Südpol des Magneten vom Zentrum des Basiskörpers abgewandt ist. Von Vorteil ist hierbei, dass der Basiskörper mit einem benachbarten Basiskörper sich stets in einer gewissen Position zusammenkoppelt, wodurch erreicht werden kann, dass sich die Photovoltaikmodule im Wasser selbstständig ausrichten und orientieren. Insbesondere kann vorgesehen sein, dass ein Photovoltaikmodul von vier weiteren Photovoltaikmodulen umgeben wird, wobei die fünf Photovoltaikmodule jeweils in einer bestimmten Ausrichtung aneinander gekoppelt sind. In der Gesamtheit können so theoretisch unendlich viele Basiskörper aneinander gereiht werden.

Darüber hinaus kann vorgesehen sein, dass die Magnete seitlich neben einer durch das Zentrum des Basiskörpers verlaufenden Mittellinie angeordnet sind. Von Vorteil ist hierbei, dass sich dadurch zwei zueinander benachbarte Photovoltaikmodule in einer vordefinierten Ausrichtung aneinanderkoppeln.

Vorteilhaft ist auch eine Ausprägung, gemäß welcher vorgesehen sein kann, dass die an einem Basiskörper angeordneten Photovoltaikzellen eine gewölbte Oberfläche bilden. Dies bringt den Effekt mit sich, dass dadurch vermieden werden kann, dass sich Wasser an der Oberfläche der Photovoltaikzellen ansammelt. Darüber hinaus kann dadurch die Effizienz eines Photovoltaikmoduls gesteigert werden, da über den Tag verteilt der Winkel der Sonneneinstrahlung auf die Photovoltaikzellen optimiert werden kann.

Ferner kann es zweckmäßig sein, dass die am Basiskörper angeordneten Photovoltaikzellen einen gemeinsamen Stromanschluss aufweisen mittels welchem zwei zueinander benachbarte Photovoltaikmodule zur kabelgebundenen Stromübertragung miteinander verbindbar sind. Von Vorteil ist hierbei, dass zueinander benachbarte Photovoltaikmodule zur Stromübertragung zusammengeschlossen werden können.

Alternativ dazu kann vorgesehen sein, dass die am Basiskörper angeordneten Photovoltaikzellen mit zumindest einer Spule verbunden sind, welche Spule im Umfangbereich des Basiskörpers angeordnet ist, wobei der Strom zwischen zwei Photovoltaikmodulen durch Induktion kabellos mittels der Spulen übertragbar ist. Von Vorteil ist hierbei, dass zwischen den einzelnen Photovoltaikmodulen keine kabelgebundene Verbindung hergestellt werden muss, wodurch sich beispielsweise nach erhöhtem Wellengang oder nach einem Sturm die auseinandergerissenen Photovoltaikmodule in beliebiger Kombination neu anordnen können. Insbesondere wird dadurch erreicht, dass die Flexibilität der aus einzelnen Photovoltaikmodulen bestehenden Photovoltaikanlage erhöht wird und somit eine Beschädigung der Photovoltaikanlage bei einem derartigen Naturereignis hintangehalten werden kann.

Weiters kann vorgesehen sein, dass die Spule auf einer durch das Zentrum des Basiskörpers verlaufenden Mittellinie angeordnet ist. Von Vorteil ist hierbei, dass dadurch eine beliebige Kombination von verschiedenen Photovoltaikmodulen zueinander realisiert werden kann.

Ferner kann es zweckmäßig sein, dass mindestens zwei Kontaktstellen am Umfangbereich des Basiskörpers angeordnet sind, welche zum Kontaktieren von zwei Kontaktstellen eines weiteren Photovoltaikmoduls ausgebildet sind und somit zur Stromübertragung zwischen zwei Photovoltaikmodulen dienen. Von Vorteil ist hierbei, dass der Strom zwischen zwei Photovoltaikmodulen kabelgebunden übertragen werden kann, wobei durch die Kontaktstellen eine stromführende Verbindung zwischen zwei Photovoltaikmodulen geschaffen werden kann. Insbesondere kann es hierbei notwendig sein, dass die Kontaktstelle aus einem Korrosionsbeständigen Material gefertigt ist, um eine durch die Nähe zum Wasser bedingte Korrosion hintan zu halten.

Darüber hinaus kann vorgesehen sein, dass an einem Seitenbereich des Basiskörpers zumindest zwei Magnete angeordnet sind, wobei die Magnete als Kontaktstellen ausgebildet sind. Von Vorteil ist hierbei, dass die Magnete direkt zur Stromübertragung zwischen zwei Photovoltaikmodulen verwendet werden können. Weiters ergibt sich daraus der Vorteil, dass die Kontaktstellen zwischen den Photovoltaikmodulen gut aneinander gepresst werden können und somit sichergestellt ist, dass der Strom gut zwischen zwei zueinander benachbarten Photovoltaikmodulen übertragen werden kann.

Entsprechend einer vorteilhaften Weiterbildung kann vorgesehen sein, dass der Basiskörper scheibenförmig ausgebildet ist und eine ebene Grundfläche sowie eine parallel zu dieser angeordnete Deckfläche aufweist. Von Vorteil ist hierbei, dass ein derartig ausgebildeter Basiskörper eine hohe Kippstabilität aufweist und somit auch bei Wellengang ein ungewolltes Umkippen des Basiskörpers weitestgehend vermieden werden kann.

Darüber hinaus kann vorgesehen sein, dass der Basiskörper als Hohlkörper ausgebildet ist. Von Vorteil ist hierbei, dass der Basiskörper durch diese Maßnahme eine sehr geringe Masse aufweisen kann und dadurch einerseits die Handhabbarkeit des Photovoltaikmoduls erhöht werden kann und andererseits der vom Basiskörper erzeugte Auftrieb erhöht werden kann. Darüber hinaus wird bei Photovoltaikmodulen mit einer möglichst geringen Gesamtmasse die Gefahr vermindert, dass sich die einzelnen Photovoltaikmodule bei Wellengang gegenseitig beschädigen.

Photovoltaikzellen im Sinne dieses Dokumentes sind jene Elemente, welche durch deren Schichtaufbau zur Erzeugung von Strom durch Umwandlung von Licht oder Wärme ausgebildet sind. Die Photovoltaikzellen sind vorzugsweise als Siliziumzellen ausgebildet.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Ansicht einer Photovoltaikanlage mit mehreren Photovoltaikmodulen;
- Fig. 2: eine perspektivische Ansicht von schräg oben auf zwei nebeneinander angeordnete Photovoltaikmodule;
- Fig. 3: eine perspektivische Ansicht von schräg unten auf ein weiteres Ausführungsbeispiel zweier nebeneinander angeordneter Photovoltaikmodule;
- Fig. 4: eines Explosionsdarstellung eines Ausführungsbeispiels von zwei nebeneinander angeordneten Photovoltaikmolen;
- Fig. 5: eine Draufsicht auf zwei nebeneinander angeordneten Photovoltaikmole;
- Fig. 6: eine Schnittdarstellung der Photovoltaikmodule gemäß der Schnittlinie VI-VI in Fig. 5;
- Fig. 7: eine Ansicht von Unten auf die Photovoltaikmodule;
- Fig. 8: eine schematische Darstellung eines Photovoltaikmodules im Querschnitt;
- Fig. 9: eine schematische Darstellung eines weiteren Ausführungsbeispiels eines Photovoltaikmodules mit gewölbter Oberfläche im Querschnitt;
- Fig. 10: eine schematische Darstellung eines weiteren Ausführungsbeispiels eines Photovoltaikmodules mit gerader Oberfläche im Querschnitt.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

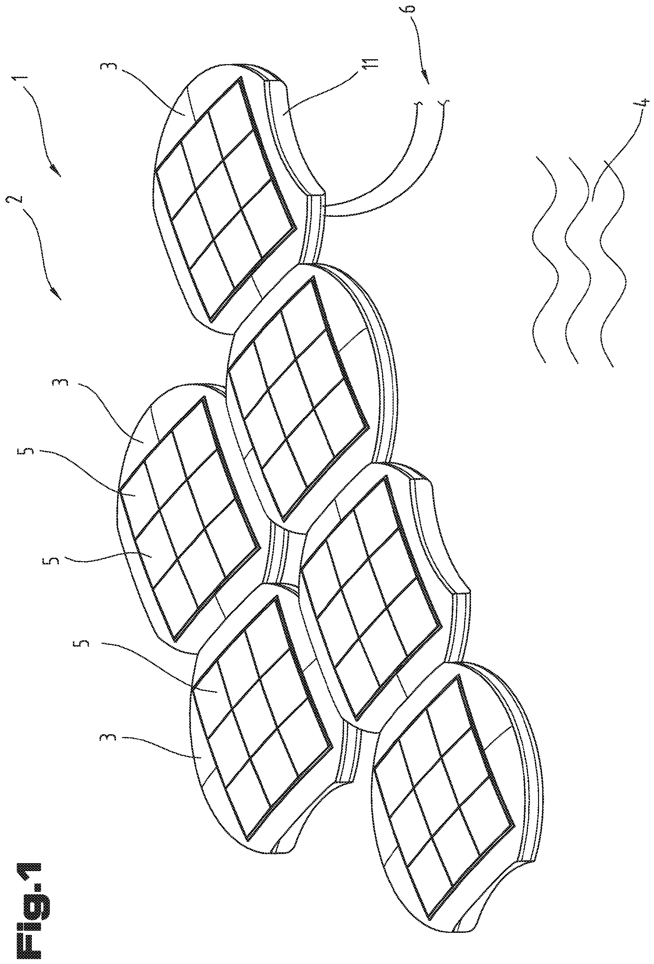

Fig. 1 zeigt eine perspektivische Ansicht einer Photovoltaikanlage 1, welche aus einem Verbund 2 von mehreren Photovoltaikmodulen 3 besteht. Die einzelnen Photovoltaikmodule 3 sind derart ausgebildet, dass sie in einem Fluid wie etwa Wasser 4 aufschwimmen.

Die Photovoltaikmodule 3 sind zur Produktion von Strom aus Sonnenenergie vorgesehen, wobei sie jeweils eine oder mehrere Photovoltaikzellen 5 aufweisen, welche zur Umwandlung von Sonnenenergie in Strom ausgebildet sind.

Weiters kann vorgesehen sein, dass an einem der Photovoltaikmodule 3 eine Stromableitung 6 ausgebildet ist, mittels welcher der in den Photovoltaikmodulen 3 erzeugte Strom zu einem Wechselrichter geführt werden kann bzw. in das Stromnetz eingeleitet werden kann.

Eine derart ausgebildete Photovoltaikanlage 1 kann beispielsweise an großen Wasserflächen wie etwa einem Stausee, einem natürlichen See, am Meer oder einem sonstigen Gewässer installiert werden. Die Photovoltaikanlage 1 bringt den Vorteil mit sich, dass die ansonsten ungenützte Oberfläche des Sees oder des Meeres zur Produktion von Strom mittels der Photovoltaikanlage 1 genützt werden kann. Darüber hinaus wird der Wirkungsgrad der Photovoltaikanlage 1 bzw. der einzelnen Photovoltaikmodule 3 durch das Wasser 4 erhöht, da die einzelnen Photovoltaikmodule 3 durch das Wasser 4 gekühlt werden. Ein weiterer Vorteil einer derartigen Photovoltaikanlage 1 liegt darin, dass durch die Photovoltaikanlage 1 die Sonneneinstrahlung auf die Wasseroberfläche abgeschattet werden kann, wodurch es einerseits zu geringeren Verdunstungen kommt und darüber hinaus das Algenwachstum im Gewässer verringert werden kann.

Die Photovoltaikanlage 1 kann beliebig viele Photovoltaikmodule 3 umfassen, welche zum Verbund 2 zusammengeschlossen sind. Darüber hinaus können die einzelnen Photovoltaikmodule 3 beliebig aneinander geordnet werden, sodass die Photovoltaikanlage 1 eine beliebige an das jeweilige Gewässer angepasste Außenkontur aufweisen kann.

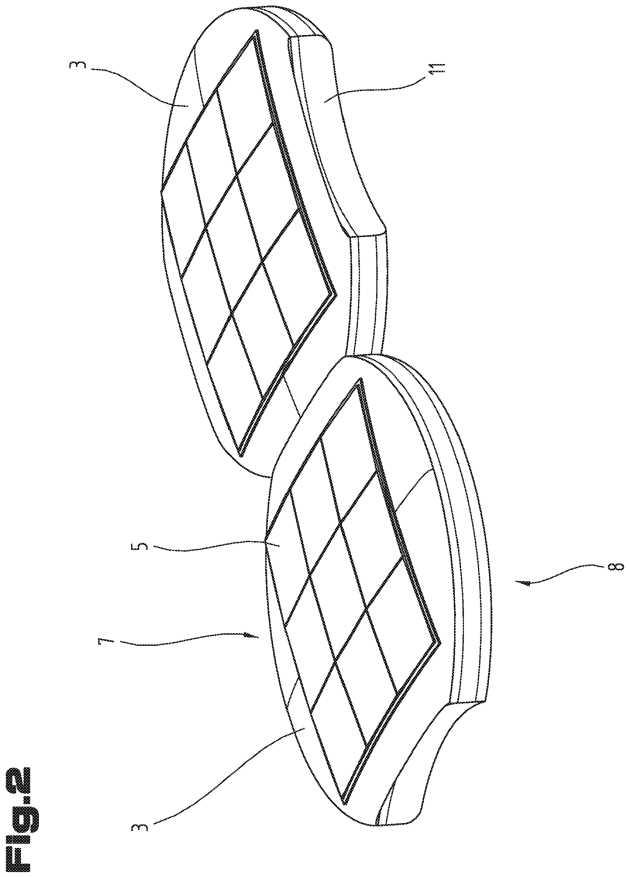

Fig. 2 zeigt eine perspektivische Ansicht von zwei nebeneinander angeordneten Photovoltaikmodulen 3. Insbesondere ist eine Oberseite 7 der Photovoltaikmodule 3, auf welcher die Photovoltaikzellen 5 angeordnet sind, gut ersichtlich. Eine Unterseite 8 der Photovoltaikmodule 3 ist im Einsatzzustand der Photovoltaikmodule 3 dem Wasser 4 zugewandt. Wie aus Fig. 2 ersichtlich können an einem der Photovoltaikmodule 3 einzelne Photovoltaikzellen 5 angeordnet sein. Alternativ dazu kann vorgesehen sein, dass an einem der Photovoltaikmodule 3 nur eine einzelne Photovoltaikzelle 5 angeordnet ist.

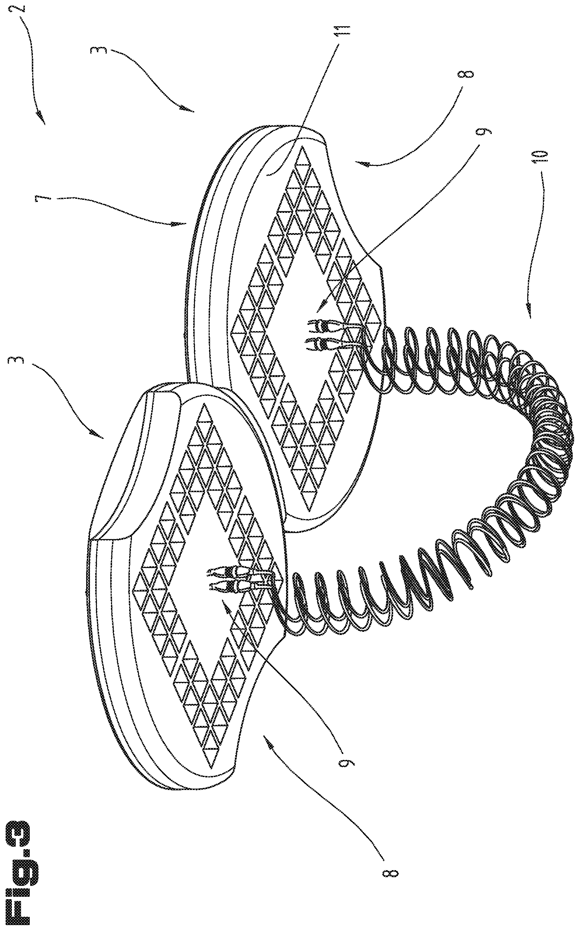

Fig. 3 zeigt eine perspektivische Ansicht eines weiteren Ausführungsbeispiels von zwei nebeneinander angeordneten Photovoltaikmodulen 3, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen. Insbesondere ist in Fig. 3 die Unterseite 8 der Photovoltaikmodule 3 ersichtlich.

Weiters ist aus Fig. 3 ersichtlich, dass vorgesehen sein kann, dass an der Unterseite 8 der Photovoltaikmodule 3 ein Stromanschluss 9 angeordnet sein kann, um zwei nebeneinander angeordnete Photovoltaikmodule 3 mit einem Stromkabel 10 verbinden zu können. Dadurch kann Strom zwischen zwei zueinander benachbarten Photovoltaikmodulen 3 geleitet werden. Hierbei ist es denkbar, dass an einem Photovoltaikmodul 3 mehrere der Stromanschlüsse 9 ausgebildet sind, sodass mehrere Photovoltaikmodule 3 zu einem Verbund 2 zusammengeschlossen werden können. Darüber hinaus kann vorgesehen sein, dass das Stromkabel 10 gleichzeitig zum zueinander sichern der Photovoltaikmodule 3 dient, um so vermeiden zu können, dass bei Lösung der Magnete 14 die Photovoltaikmodule 3 voneinander abtreiben.

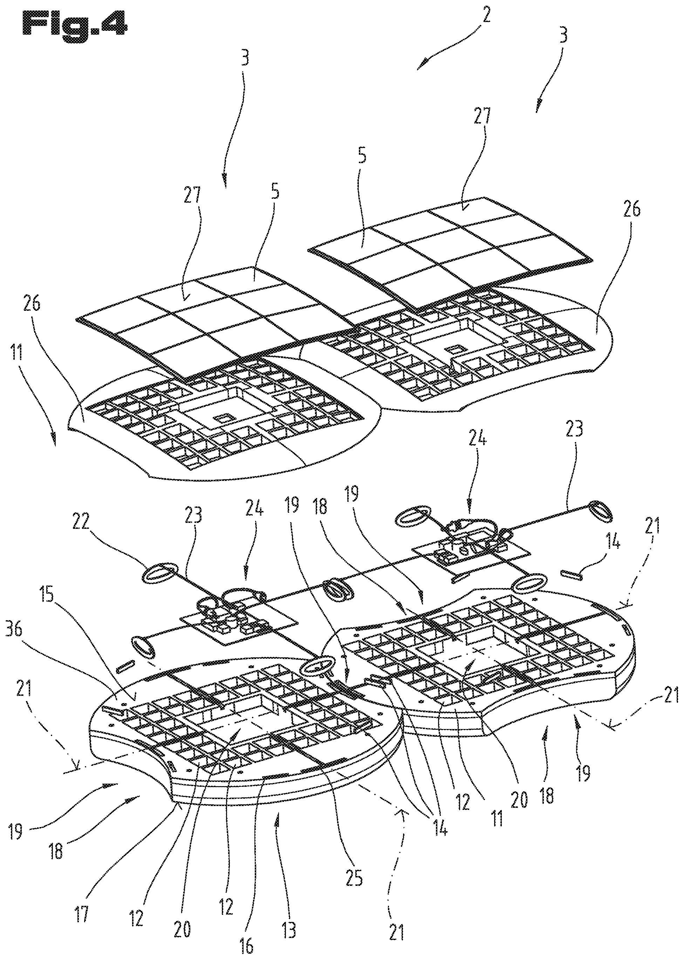

Fig. 4 zeigt ein weiteres Ausführungsbeispiel eines Photovoltaikmoduls 3, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen. In Fig. 4 sind zwei nebeneinander angeordnete Photovoltaikmodule 3 in einer Explosionsansicht dargestellt, wobei anhand der Fig. 4 das Innenleben der Photovoltaikmodule 3 beschrieben werden kann.

Wie aus Fig. 4 ersichtlich weist das Photovoltaikmodul 3 einen Basiskörper 11 auf. Der Basiskörper 11 dient als Trageinheit für die Photovoltaikzelle 5 und ist derart ausgebildet, dass er im Wasser aufschwimmt. Beispielsweise kann der Basiskörper 11 aus einem Kunststoffmaterial gebildet sein, welches eine geringere Dichte aufweist als Wasser.

In weiteren Variante kann der Basiskörper 11 als Hohlkörper ausgebildet sein, wobei durch den innenliegenden Hohlraum, welcher mit Luft gefüllt ist, ausreichender Auftrieb zum Tragen der Photovoltaikzellen 5 erzeugt werden kann. Weiters kann vorgesehen sein, dass im Basiskörper 11 mehrere Taschen 12 ausgebildet sind, welche den Basiskörper 11 ganz durchdringen. Die Taschen 12 sind zur Unterseite 8 des Basiskörpers 11 hin offen.

Weiters kann vorgesehen sein, dass in einem Umfangbereich 13 des Basiskörpers 11 zumindest ein Magnet 14 angeordnet ist, durch welchen zwei zueinander benachbart angeordnete Basiskörper 11 aneinander gekoppelt werden können. Insbesondere kann vorgesehen sein, dass am Basiskörper 11 vier der Magnete 12 angeordnet sind, sodass an den Basiskörper 11 vier weitere Basiskörper angekoppelt werden können. Insbesondere kann vorgesehen sein, dass der Basiskörper 11 an einer Deckfläche 15 eine Magnetaufnahmeöffnung 16 aufweist, in welche der Magnet 14 eingesetzt bzw. aufgenommen werden kann und dort auch fixiert werden kann. Diese Fixierung kann beispielsweise mittels einem Befestigungsmittel oder etwa durch eine stoffschlüssige Klebung erfolgen. Die Magnetaufnahmeöffnung 16 ist vorzugsweise als Tasche ausgebildet und reicht nicht bis zur Grundfläche 17 des Basiskörpers 11.

Aus Fig. 4 ist weiters ersichtlich, dass die Grundfläche 17 des Basiskörpers 11 im Wesentlichen kreisförmig ausgebildet sein kann, wobei an zwei einander gegenüberliegenden Kreisabschnitten 18 jeweils eine Ausnehmung 19 ausgebildet ist. Die Ausnehmung 19 kann insbesondere derart ausgebildet sein, dass das benachbarte Photovoltaikmodul 3 teilweise in der Ausnehmung 19 aufgenommen werden kann. Dadurch kann erreicht werden, dass die einzelnen Photovoltaikmodule 3 trotz ihrer kreisförmigen Grundfläche 17 relativ platzsparend aneinandergefügt werden können.

Insbesondere kann vorgesehen sein, dass am Basiskörper 11 über den Umfang verteilt vier der Magnete 14 angeordnet sind, wobei jene Magnete 14, welche im Bereich der Ausnehmung 19 angeordnet sind mit deren Südpol nach außen gerichtet sein können und jene Magnete 14, welche nicht im Bereich der Ausnehmung 19 angeordnet sind, mit deren Nordpol nach außen gerichtet sein können.

Dadurch dass sich jeweils Nordpol und Südpol von zwei Magneten einander anziehen, kann erreicht werden, dass durch die Magnetkraft der Basiskörper 11 mit dessen kreisrundem Kreisabschnitt an die Ausnehmung 19 des nächstliegend angeordneten Basiskörpers 11 ankoppelt. Somit können zwei zueinander benachbarte Basiskörper 11 durch die Magnetkraft der Magneten 14 aneinander gekoppelt werden, wobei die Verbindung zwischen den beiden Basiskörpern 11 bei übermäßiger Krafteinwirkung einfach getrennt werden kann, wenn die Magnetkraft der Magneten 14 geringer ist, als die von außen einwirkende Kraft.

Natürlich können die Magneten 14 bezüglich Nord- und Südpol auch entsprechend umgedreht im Basiskörper 11 eingesetzt sein.

Wie aus Fig. 4 ersichtlich kann vorgesehen sein, dass die Basiskörper 11 symmetrisch bezüglich einer durch das Zentrum 20 des Basiskörpers 11 verlaufenden Mittellinie 21 ausgebildet sind und auch symmetrisch bezüglich einer zu dieser Mittellinie 21 um 90° gedrehten zweiten Mittellinie 21 ausgebildet sind.

Von der Symmetrie ausgenommen können kleine Taschen bzw. Ausnehmungen im Basiskörper 11 sein. Beispielsweise kann vorgesehen sein, dass die Magnetaufnahmeöffnung 16 bzw. damit zusammenhängend die Magnete 14, seitlich neben einer durch das Zentrum 20 des Basiskörpers 11 verlaufenden Mittellinie 21 angeordnet sind. Dadurch kann erreicht werden, dass zwei zueinander benachbarte Basiskörper 11 in einer vorbestimmten Stellung aneinander anhaften.

Die Magnete 14 sind insbesondere als Dauermagnete mit jeweils einem Nordpol und einem Südpol ausgebildet. Die Magnete 14 können insbesondere plattenartig ausgebildet sein.

Neben der beschriebenen und in den Figuren dargestellten Formgebung der Photovoltaikmodule 3 können diese auch eine andere Formgebung aufweisen. Beispielsweise ist es denkbar, dass die Photovoltaikmodule 3 rechteckig oder Hexagonal ausgebildet sind. In einer weiteren Ausführungsvariante ist es auch denkbar, dass die Photovoltaikmodule 3 eine dreieckige Grundfläche aufweisen. Je nach Form der Grundfläche sind verschieden viele Magnete 14 am Photovoltaikmodul 3 angeordnet.

Wie aus dem Ausführungsbeispiel in Fig. 4 ersichtlich kann weiters vorgesehen sein, dass das Photovoltaikmodul 3 zumindest eine Spule 22 umfasst, mittels welcher Strom übertragen werden kann. Die Spule 22 dient insbesondere zur kabellosen Stromübertragung zwischen den zwei zueinander benachbarten Photovoltaikmodulen 3. Der Strom wird hierbei durch Induktion von der ersten zur zweiten Spule 22 übertragen. Weiters kann vorgesehen sein, dass zwei Spulen 22, welche einander zugehörig sind, eine verschiedene Wicklungszahl aufweisen und somit der übertragene Strom gleichzeitig transformiert werden kann.

Weiters kann vorgesehen sein, dass die Spulen 22 mittels einem Stromkabel 23 mit einer elektrischen Schaltung 24 gekoppelt sind. Die elektrische Schaltung 24 kann zur Regelung der Photovoltaikzellen 5 ausgebildet sein. Insbesondere kann vorgesehen sein, dass die elektrische Schaltung 24 einen oder mehrere Kondensatoren enthält, wodurch der von der Photovoltaikzellen 5 erzeugte Gleichstrom in Wechselstrom gewandelt werden kann, um mittels der Spulen 22 zwischen zwei Photovoltaikmodulen 3 übertragen werden zu können.

Bei der Alternativvariante entsprechend Fig. 3 kann vorgesehen sein, dass die elektrische Schaltung 24 den Stromanschluss 9 aufweist. Die elektrische Schaltung 24 kann wasserdicht abgeschlossen am Basiskörper 11 aufgenommen sein.

Insbesondere können am Basiskörper 11 vier der Spulen 22 angeordnet sein. Die Spulen 22 sind vorzugsweise mittig der Mittellinie 21 angeordnet. Der Basiskörper 11 kann eine Spulenaufnahmeöffnung 25 aufweisen, in welcher die Spule 22 aufgenommen werden kann. Wie aus Fig. 4 weiters ersichtlich, kann die Spule 22 eine leicht gewölbte Form aufweisen, wobei die Wölbung der Spule 22 an die Ausnehmung 19 bzw. an den Umfangbereich 13 des Basiskörpers 11 angepasst ist. Somit kann erreicht werden, dass die Spulen 22 möglichst parallel zueinander verlaufend am Basiskörper 11 angeordnet sind.

Weiters kann vorgesehen sein, der Basiskörper 11 geteilt ausgeführt ist und ein Basiskörperoberteil 26 ausgebildet ist, welcher zur Aufnahme der Photovoltaikzellen 5 dient. Der Basiskörperoberteil 26 kann vorzugsweise eine gewölbte Oberseite aufweisen, sodass auch die am Basiskörperoberteil 26 angeordneten Photovoltaikzellen 5 eine gewölbte Oberfläche 27 bilden. Insbesondere ist die Oberfläche 27 konvex nach außen gewölbt. Der Basiskörperoberteil 26 kann beispielsweise mittels einer Steckverbindung am Hauptteil 36 des Basiskörpers 11 aufgesteckt sein, um so erreichen zu können, dass die einzelnen Photovoltaikzellen 5 mitsamt des Basiskörperoberteils 26 unabhängig vom Basiskörper 11 ausgetauscht werden können.

Alternativ zu einer geteilten Ausführung mit Basiskörperoberteil 26 kann vorgesehen sein, dass der Basiskörper 11 einstückig ausgebildet ist. Daher kann vorgesehen sein, dass der Basiskörper 11 aus einem Hauptteil 36 und aus einem Basiskörperoberteil 26 besteht, welche beispielsweise in verschiedenen Produktionsprozessen hergestellt wurden, jedoch stoffschlüssig untrennbar miteinander verbunden sind. Dadurch kann beispielsweise erreicht werden, dass der Hauptteil 36 des Basiskörpers 11 immer gleich ausgebildet sein kann und dass verschiedene Basiskörperoberteile 26 ausgebildet sind, durch welche die Formgebung der Photovoltaikzellen 5 realisiert ist.

In einer weiteren Alternativvariante kann vorgesehen sein, dass der Basiskörper 11 einteilig ausgebildet ist und beispielsweise als Spritzgussformteil ausgebildet ist.

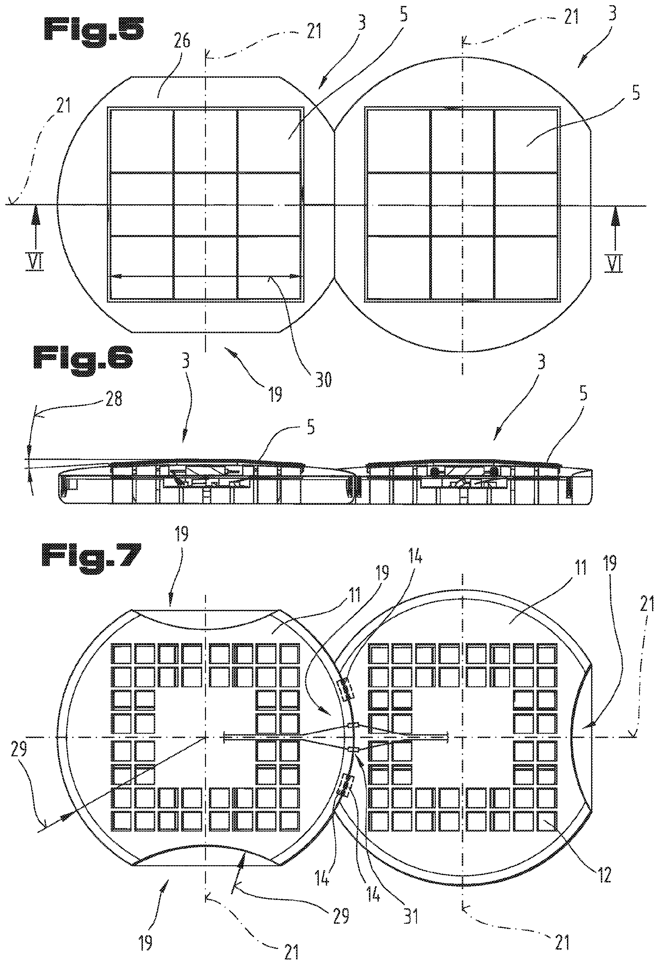

Fig. 5 zeigt eine Draufsicht auf zwei nebeneinander angeordnete Photovoltaikmodule 3, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

In Fig. 5 ist ersichtlich, dass vorgesehen sein kann, dass der Basiskörperoberteil 26 die Ausnehmung 19 des Basiskörpers 11 zumindest teilweise überdecken kann.

Aus Fig. 5 ist weiters ersichtlich, dass die Photovoltaikzellen 5 ein Karomuster am Photovoltaikmodul 3 ausbilden können, wobei die Photovoltaikzellen 5 eine quadratische Erscheinungsform mit einer Seitenlänge 30 zwischen 70mm und 1800mm, insbesondere zwischen 200mm und 1000mm, bevorzugt zwischen 400mm und 600mm aufweisen können.

Fig. 6 zeigt einen Schnitt durch zwei nebeneinander angeordnete Photovoltaikmodule 3, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Aus Fig. 6 ist gut ersichtlich, dass die einzelnen einem Photovoltaikmodul 3 angeordneten Photovoltaikzellen 5 eine Wölbung aufweisen können. Die Wölbung kann entweder dadurch erreicht werden, dass die Photovoltaikzelle 5 an sich gewölbt ist, oder dass mehrere Photovoltaikzellen 5 an der Oberseite 7 des Photovoltaikmoduls 3 angeordnet sind, wobei die äußeren Photovoltaikzellen 5 in einem Winkel 28 zur Grundfläche 17 bzw. zur mittleren Photovoltaikzelle 5 nach außen hin geneigt angeordnet sind.

Fig. 7 zeigt die Photovoltaikmodule 3 in einer Ansicht von unten. In Fig. 7 ist besonders gut ersichtlich, dass der Basiskörper 11 im Wesentlichen kreisförmig ausgebildet ist und einen Radius 29 aufweist. Der Radius 29 kann zwischen 100mm und 2000mm, insbesondere zwischen 200mm und 1000mm, bevorzugt zwischen 300mm und 400mm betragen. Weiters ist aus Fig. 7 besonders gut ersichtlich, dass die Ausnehmung 19 den gleichen Radius 29 aufweisen kann, sodass der Basiskörper 11 in der Ausnehmung 19 zumindest teilweise aufgenommen werden kann.

Darüber hinaus in Fig. 7 schematisch dargestellt, dass vorgesehen sein kann, dass an den Photovoltaikmodulen 3 einzelne Kontaktstellen 31 ausgebildet sein können, welche zur Stromübertragung zwischen den Photovoltaikmodulen 3 dienen können. Die Kontaktstellen 31 können als Elemente ausgebildet sein, welche aneinander anliegen. Weiters kann auch vorgesehen sein, dass in den Kontaktstellen 31 Federelemente angeordnet sind, durch welche gewährleistet ist, dass der Stromübertragende Kontakt zwischen zwei Photovoltaikmodulen zu jedem Zeitpunkt möglichst gut hergestellt ist, indem sie aneinander Drücken.

In einer Ausführungsvariante kann vorgesehen sein, dass die Kontaktstellen 31 beispielsweise durch Elemente aus Graphit, Kupfer oder sonstige leitende Werkstoffe gebildet werden. Darüber hinaus ist es auch möglich, dass nur die Kontaktbereiche mit einem leitenden Werkstoff überzogen sind.

Weiters ist es möglich, dass die Magnete 14 als Kontaktstellen 31 ausgebildet sind.

Wie auch aus Fig. 7 ersichtlich, kann vorgesehen sein, dass verschieden viele Magnete 14 am Basiskörper 11 angeordnet sind. Auch die Position der Magnete 14 am Basiskörper 11 kann variabel gestaltet werden.

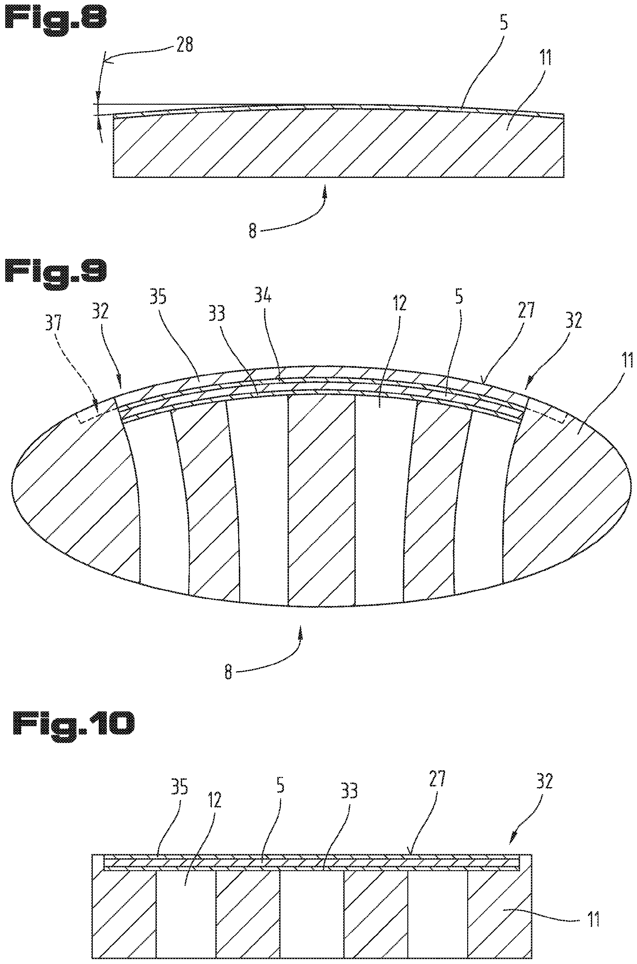

Fig. 8 zeigt ein weiteres Ausführungsbeispiel eines Photovoltaikmoduls 3, wobei wiederum für gleiche Teile gleiche Bezugszeichen bzw. Bauteilbezeichnungen wie in den vorangegangenen Figuren 1 bis 7 verwendet werden. Um unnötige Wiederholungen zu vermeiden, wird auf die detaillierte Beschreibung in den vorangegangenen Figuren 1 bis 7 hingewiesen bzw. Bezug genommen. In dem Ausführungsbeispiel entsprechend Fig. 8 weist das Photovoltaikmodul 3 eine gewölbte Oberfläche in Form einer Kuppel auf.

Wie aus Fig. 8 ersichtlich, kann vorgesehen sein, dass die Photovoltaikzelle 5 direkt in den Basiskörper 11 integriert ist.

Weiters kann vorgesehen sein, dass nur eine einzelne Photovoltaikzelle 5 ausgebildet ist, welche eine Rundung aufweist und dadurch die gewölbte Oberfläche 27 ausbildet. Durch die Rundung kann erreicht werden, dass die Oberfläche 27 in einem Randbereich in einem Winkel 28 zu einem zentralen Bereich des Photovoltaikmodules 3 angeordnet ist. Zur Bestimmung des Winkels 28 wird in einem Randbereich eine Tangente an die Oberfläche 27 des Photovoltaikmodules 3 gelegt. Als Randbereich wird jener Bereich betrachtet, welcher sich nahe des Außenrandes befindet.

In einer Alternative kann vorgesehen sein, dass die gewölbte Oberfläche 27 durch mehrere Photovoltaikzellen 5 gebildet wird, welche in einem Winkel zueinander angeordnet sind.

Durch den Zusammenschluss von mehreren Photovoltaikmodulen 3 mit einer gewölbten Oberfläche kann erreicht werden, dass Sonnenstrahlen, welche von der Oberfläche 27 eines ersten Photovoltaikmodules 3 reflektiert werden auf ein nebenstehendes Photovoltaikmodul 3 geworfen werden. Dadurch kann der Wirkungsgrad der Photovoltaikanlage 1 erhöht werden.

Fig. 9 zeigt ein weiteres Ausführungsbeispiel eines Photovoltaikmoduls 3, wobei wiederum für gleiche Teile gleiche Bezugszeichen bzw. Bauteilbezeichnungen wie in den vorangegangenen Figuren 1 bis 8 verwendet werden. Um unnötige Wiederholungen zu vermeiden, wird auf die detaillierte Beschreibung in den vorangegangenen Figuren 1 bis 8 hingewiesen bzw. Bezug genommen.

Wie aus Fig. 9 ersichtlich, kann vorgesehen sein, dass der Basiskörper 11 eine Ausnehmung 32 aufweist in welcher die Photovoltaikzellen 5 aufgenommen sind.

Weiters kann vorgesehen sein, dass ein unteres Einbettelement 33 ausgebildet ist, welches an der Unterseite der Photovoltaikzellen 5 ausgebildet ist und somit zwischen Basiskörper 11 und Photovoltaikzellen 5 angeordnet ist. Das untere Einbettelement 33 kann beispielsweise in Form einer Kunststoffschicht aus Ethylenvinylacetat oder beispielsweise als Gießharzschicht ausgebildet sein. Natürlich sind auch sämtliche andere Werkstoffe zum Einsatz als unteres Einbettelement 33 geeignet welche als Feuchtigkeitssperre dienen können.

Wenn das untere Einbettelement 33 in Form von Kunststofffolien ausgebildet sind werden sie mit den Solarzellen verschweißt, insbesondere auflaminiert, und bilden so einen wasserdichten Korrosionsschutz für die Photovoltaikzellen 5.

Weiters kann vorgesehen sein, dass ein oberes Einbettelement 34 ausgebildet ist, welches an der Oberseite der der Photovoltaikzellen 5 ausgebildet ist. Das obere Einbettelement 34 kann gleich wie das untere Einbettelement 33 aufgebaut sein, daher wird der Kürze halber auf eine detaillierte Beschreibung des oberen Einbettelementes 34 verzichtet.

Weiters kann vorgesehen sein, dass zum Schutz der Photovoltaikzellen 5 vor mechanischer Beschädigung eine Glasabdeckung 35 ausgebildet ist. Die Glasabdeckung 35 kann aus einem mineralischen Glas oder auch aus einem sonstigen Werkstoff gefertigt sein, welcher die gleichen Eigenschaften erfüllt. Beispielsweise kann die Glasabdeckung 35 aus Polymethylmethacrylat gefertigt sein.

Weiters ist es auch denkbar, dass wie in Fig. 9 dargestellt, die Glasabdeckung 35 gegenüber den Photovoltaikzellen 5 seitlich vorstehend angeordnet ist, sodass diese in einem Auflagebereich 37 direkt am Basiskörper 11 aufliegt. In diesem Auflagebereich 37 kann die Glasabdeckung 35 mit dem Basiskörper 11 verklebt sein. Zum Verkleben der Glasabdeckung 35 mit dem Basiskörper 11 kann beispielsweise ein Silikon eingesetzt werden, welches zusätzlich eine Dichtwirkung erzielen kann.

Wie aus Fig. 9 ersichtlich, dringen die Taschen 12 den Basiskörper 11 zur Gänze durch. Dadurch kann erreicht werden, dass die Photovoltaikzellen 5 oder zumindest das untere Einbettelement 33 von der Unterseite 8 des Photovoltaikmodules 3 zugänglich sind. Dadurch kann eine verbesserte Kühlung der Photovoltaikzellen 5 erreicht werden, da Wasser durch die Taschen 12 hindurch an die Unterseite der Photovoltaikmodule 3 schwappen kann.

Fig. 10 zeigt ein weiteres Ausführungsbeispiel eines Photovoltaikmoduls 3, wobei wiederum für gleiche Teile gleiche Bezugszeichen bzw. Bauteilbezeichnungen wie in den vorangegangenen Figuren 1 bis 9 verwendet werden. Um unnötige Wiederholungen zu vermeiden, wird auf die detaillierte Beschreibung in den vorangegangenen Figuren 1 bis 9 hingewiesen bzw. Bezug genommen.

Aus Fig. 10 ist ersichtlich, dass auch vorgesehen sein kann, dass das Photovoltaikmodul 3 als ebener Körper ausgebildet sein kann oder dass zumindest die Oberfläche 27 der Photovoltaikzellen 5 als ebene Fläche ausgebildet sein kann. In diesem Ausführungsbeispiel ist auch dargestellt, dass das untere Einbettelement 33 weggelassen werden kann.

Die Ausführungsbeispiele zeigen mögliche Ausführungsvarianten des Photovoltaikmodules 3, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8, 1, oder 5,5 bis 10.

Vor allem können die einzelnen in den Figuren 1, 2, 3, 4, 5, 6, 7, 8, 9, 10 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

Der Ordnung halber sei abschließend darauf hingewiesen, dass zum besseren Verständnis des Aufbaus des Photovoltaikmoduls 3 dieses bzw. dessen Bestandteile teilweise unmaßstäblich und/oder vergrößert und/oder verkleinert dargestellt wurden.

**Bezugszeichenaufstellung**

| | | | |
|---|---|---|---|
| 1 | Photovoltaikanlage | 31 | Kontaktstelle |
| 2 | Verbund | 32 | Ausnehmung |
| 3 | Photovoltaikmodul | 33 | unteres Einbettelement |
| 4 | Wasser | 34 | oberes Einbettelement |
| 5 | Photovoltaikzelle | 35 | Glasabdeckung |
| 6 | Stromableitung | 36 | Hauptteil Basiskörper |
| 7 | Oberseite | 37 | Auflagebereich Glasabdeckung |
| 8 | Unterseite | | |
| 9 | Stromanschluss | | |
| 10 | Stromkabel | | |
| 11 | Basiskörper | | |
| 12 | Tasche | | |
| 13 | Umfangbereich | | |
| 14 | Magnet | | |
| 15 | Deckfläche | | |
| 16 | Magnetaufnahmeöffnung | | |
| 17 | Grundfläche | | |
| 18 | Kreisabschnitt | | |
| 19 | Ausnehmung | | |
| 20 | Zentrum | | |
| 21 | Mittellinie | | |
| 22 | Spule | | |
| 23 | Stromkabel | | |
| 24 | elektrische Schaltung | | |
| 25 | Spulenaufnahmeöffnung | | |
| 26 | Basiskörperoberteil | | |
| 27 | Oberfläche | | |
| 28 | Winkel | | |
| 29 | Radius | | |
| 30 | Seitenlänge | | |

## Patentansprüche

1. Photovoltaikmodul (3) zur Produktion von Strom aus Sonnenenergie, umfassend einen Basiskörper (11), mit einer Unterseite (8) und einer Oberseite (7), und an der Oberseite (7) des Basiskörpers (11) angeordnete Photovoltaikzellen (5), wobei der Basiskörper (11) als im Wasser Auftrieb erzeugender Trägerkörper ausgebildet ist, wobei der Basiskörper (11) als formstabiler Träger für die Photovoltaikzellen (5) ausgebildet ist und die Photovoltaikzellen (5) direkt am Basiskörper (11) angeordnet sind **dadurch gekennzeichnet, dass** im Basiskörper (11) mehrere Taschen (12) ausgebildet sind, welche sich ausgehend von der Unterseite (8) des Basiskörpers (11) in Richtung zur Oberseite (7) des Basiskörpers (11) erstrecken und den Basiskörper (11) vollständig durchdringen.

2. Photovoltaikmodul nach Anspruch 1, **dadurch gekennzeichnet, dass** die Photovoltaikzellen (5) als formflexibles Dünnschicht-Photovoltaikarray ausgebildet sind und der Basiskörper (11) den Photovoltaikzellen (5) ausreichende Stabilität verleiht.

3. Photovoltaikmodul nach Anspruch 1 oder 2, **dadurch gekennzeichnet, dass** der Basiskörper (11) eine Ausnehmung (32) aufweist, in welcher die Photovoltaikzellen (5) angeordnet sind.

4. Photovoltaikmodul nach einem der vorhergehenden Ansprüche, **dadurch gekennzeichnet, dass** zwischen den Photovoltaikzellen (5) und dem Basiskörper (11) ein unteres Einbettelement (33), vorzugsweise eine Einbettfolie angeordnet ist, welche als Feuchtigkeitssperre zum Schutz der Photovoltaikzellen (5) ausgebildet ist.

5. Photovoltaikmodul nach einem der vorhergehenden Ansprüche, **dadurch gekennzeichnet, dass** die Photovoltaikzellen (5) nach außen hin mittels einer Glasabdeckung (35) abgedeckt sind, wobei die Glasabdeckung (35) bündig mit dem Basiskörper (11) abschließt.

6. Photovoltaikmodul nach einem der vorhergehenden Ansprüche, **dadurch gekennzeichnet, dass** die am Basiskörper (11) angeordneten Photovoltaikzellen (5) eine gewölbte Oberfläche (27) bilden.

7. Photovoltaikmodul nach Anspruch 6, **dadurch gekennzeichnet, dass** die Photovoltaikzellen (5) in einem Randbereich des Photovoltaikmoduls (3) in einem Winkel (28) nach außen hin geneigt angeordnet sind.

8. Photovoltaikmodul nach Anspruch 6 oder 7, **dadurch gekennzeichnet, dass** der Winkel (28) zwischen 0,5° und 15°, insbesondere zwischen 1° und 10°, bevorzugt zwischen 2° und 5° beträgt.

## Claims

1. Photovoltaic module (3) for the production of electricity from solar energy, comprising a distal base (11), with an underside (8) and an upper side (7), and photovoltaic cells (5) arranged on the upper side 5(7) of the distal base (11), wherein the distal base (11) is designed as a carrier that generates buoyancy in the water, wherein the distal base (11) is designed as a dimensionally stable carrier for the photovoltaic cells (5) and the photovoltaic cells (5) are arranged directly on the distal base (11), **characterised in that** multiple pockets (12) are formed in the distal base (11), which extend outward from the underside (8) of the 10 distal bases (11) in the direction of the upper side (7) of the distal base (11) and completely penetrate the distal base (11).

2. Photovoltaic module according to claim 1, **characterised in that** the photovoltaic cells (5) are designed as a form-flexible thin-film photovoltaic array and the distal base (11) provides sufficient stability to the photovoltaic cells (5).

3. Photovoltaic module according to claim 1 or 2, **characterised in that** the distal base (11) has a recess (32) in which the photovoltaic cells (5) are arranged.

4. Photovoltaic module according to one of the preceding claims, **characterised in that** an underside embedding element (33), preferably an embedding film, is arranged between the photovoltaic cells (5) and the distal base (11), which is designed as a moisture barrier to protect the photovoltaic cells (5).

5. Photovoltaic module according to one of the preceding claims, **characterised in that** the photovoltaic cells (5) are covered to the outside by means of a glass cover (35), wherein the glass cover (35) is flush with the distal base (11).

6. Photovoltaic module according to one of the preceding claims, **characterised in that** the photovoltaic cells (5) arranged on the distal base (11) have a curved surface (27).

7. Photovoltaic module according to claim 6, **characterised in that** the photovoltaic cells (5) are arranged on the periphery of the photovoltaic module (3) at an outwardly inclined angle (28).

8. Photovoltaic module according to claim 6 or 7, **characterised in that** the angle (28) is between 0.5° and 15°, in particular between 1° and 10°, preferably between 2° and 5°,

## Revendications

1. Module photovoitaïque (3) destiné à la production de courant à partir de l'énergie solaire, comprenant un corps de base (11), une face inférieure (8), une face supérieure (7) et des cellules photovoltaïques (5) agencées sur la face supérieure (7) du corps de base (11), le corps de base (11) étant réalisé sous la forme d'un corps de support générant une portance dans l'eau, le corps de base (11) étant réalisé sous la forme d'un support à stabilité de forme pour les cellules photovoltaïques (5) et les cellules photovoltaïques (5) étant agencées directement sur le corps de base (11), **caractérisé en ce qu'**il est formé dans le corps de base (11) plusieurs poches (12) qui s'étendent depuis la face inférieure (8) du corps de base (11) vers la face supérieure (7) du corps de base (11) et traversent complètement le corps de base (11).

2. Module photovoitaïque selon la revendication 1, **caractérisé en ce que** les cellules photovoltaïques (5) sont réalisées sous la forme d'un réseau photovoitaïque à couche mince flexible et **en ce que** le corps de base (11) confère aux cellules photovoltaïques (5) une stabilité suffisante.

3. Module photovoltaïque selon la revendication 1 ou 2, **caractérisé en ce que** le corps de base (11) présente un évidement (32) dans lequel sont agencées les cellules photovoltaïques (5).

4. Module photovoltaïque selon l'une des revendications précédentes, **caractérisé en ce qu'**il est agencé entre les cellules photovoltaïques (5) et le corps de base (11) un élément d'enrobage inférieur (33), de préférence une feuille d'enrobage, qui est conçue comme une barrière contre l'humidité en vue de protéger les cellules photovoltaïques (5).

5. Module photovoltaïque selon l'une des revendications précédentes, **caractérisé en ce que** les cellules photovoltaïques (5) sont recouvertes à l'extérieur d'une protection en verre (35), la protection en verre (35) affleurant avec le corps de base (11).

6. Module photovoltaïque selon l'une des revendications précédentes, **caractérisé en ce que** les cellules photovoltaïques (5) agencées sur le corps de base (11) forment une surface bombée (27).

7. Module photovoltaïque selon la revendication 6, **caractérisé en ce que** les cellules photovoltaïques (5) sont agencées dans une zone de bordure du module photovoltaïque (3) inclinées vers l'extérieur selon un certain angle (28).

8. Module photovoltaïque selon la revendication 6 ou 7, **caractérisé en ce que** l'angle (28) est compris entre 0,5° et 15°, en particulier entre 1° et 10°, de préférence entre 2° et 5°.
